# EUROPEAN PATENT APPLICATION

(11) **EP 4 560 488 A1**
(43) Date of publication of application: **28.05.2025**
(21) Application number: 23211335.7
(22) Date of filing: 21.11.2023
(51) Int. Cl.: G06F 16/29, G06F 16/44

(54) **IDENTIFYING AT LEAST ONE GEOSPATIAL LOCATION IN ACCORDANCE WITH USER INPUT**

(71) Applicant: TomTom Global Content B.V., 1011 AC Amsterdam (NL); TomTom Navigation B.V., 1011 AC Amsterdam (NL); TomTom Traffic B.V., 1011 AC Amsterdam (NL)
(72) Inventor: Lukanin, Artem, 1011 AC Amsterdam (NL); Chadha, Aditya Varun, 1011 AC Amsterdam (NL); Shaikh, Zishan Ahmed, 1011 AC Amsterdam (NL); Banyassady, Bahareh, 1011 AC Amsterdam (NL)
(74) Representative: Meier, Florian

(57) **Abstract**

A computer-implemented method of identifying at least one geospatial location based on user input is described. The method comprises: receiving (S100) a string (10) from a user as the user input; using (5200) the string (10) for identifying at least one point-of-interest, POI; and identifying (S300), as the at least one geospatial location, a geospatial location (50) corresponding to the at least one identified POI. Using (S200) the string (10) comprises: querying, based on at least part of the string and a predetermined plurality of POI categories, a large language model, LLM (40), for output relating to identification of at least one POI category label. Furthermore, a method of updating POI information is provided, which may advantageously use selections by a user received when executing the former method.

## Description

### Field

The present application relates to a computer-implemented method of identifying at least one geospatial location in accordance with received user input. The present application further relates to a computer-implemented method of updating point-of-interest, POI, information, for instance as part of a POI database.

### Background

There are many ways of identifying a geospatial location in accordance with received user input, for instance (but not exclusively) to identify a desired destination in the context of routing and navigation. When the user input corresponds to or includes an address, this is a simple matter of searching an electronic map for this address. In case the address is not complete or otherwise ambiguous, for instance if it contains only a street name and number, where this street name occurs in various towns/cities, multiple results can be presented. To rank these results, various factors, such as the current location (if known), can be used to aid a user in quickly identifying the intended geospatial location. Further potential factors that could be used (individually or in combination) to disambiguate a query and/or rank multiple potential results, include the location of one or more previous searches and/or destinations; a geographic area known to be relevant to a user; the relative popularity of geographic areas; etc. Likewise, if the user input corresponds to or includes the name of a point-of-interest (POI), such as the name of a business, a POI database can be searched for this name. Such a POI database can, for instance, be a separate database linked to the electronic map or could be a part of a broader map database. Here, too, in a situation where multiple results correspond at least to some extent to the user input, multiple results can be presented, ranked using various potential factors, such as the ones mentioned previously.

User input, however, is not always straightforward to disambiguate. This may be, for instance, if the user does not recall a precise address or name; if the user input is incomplete and/or contains inaccuracies (e.g. typos); if the user input is similar both to a (partial) address and to a POI name; and/or if the user is looking for a certain type of destination rather than a geospatial location corresponding to a specific place.

### Summary

To interpret a vast swath of user queries, so called large language models (LLMs) can be used. A large language model is a probabilistic model of natural language that is trained on text datasets comprising more than 500 million, optionally, more than a billion or a trillion words and adapted to generate language output based on a query (often denoted as prompt).

However, LLMs have a number of significant drawbacks. One is cost, both in terms of energy (and thus cost) and in terms of time. This is due to the size of the model and the complexity of the processing. Another is accuracy, as the output of such models to a large extent relies on patterns in the training data, rather than reflecting an "understanding" of the underlying facts. Not only do such models often return inaccurate results, or results not conforming to the parameters set by the query/prompt/instruction, but they are also prone to so-called "hallucinations", where responses are made up out of whole cloth.

Examples of the methods according to the present disclosure may efficiently harness the capabilities offered by LLMs to identify at least one geospatial location in accordance with user input, while minimizing the disadvantages inherent to LLMs. In particular, it is proposed to query an LLM using specific parameters, and to post-process the output. In some examples, it is further proposed to combine LLMs with other methods to interpret a user intent, to minimize the required costs while increasing or at least maintaining the accuracy. Furthermore, in some examples, it is proposed to treat the hallucinations by the model as a feature, rather than a bug, to update a pre-existing POI database and/or POI information.

In a first aspect, a computer-implemented method of identifying at least one geospatial location based on user input is provided. The method comprises receiving a string from a user as the user input. This string can be received using a conventional input interface. For instance, it may be a string typed into a search bar of a browser window, navigation application, navigation device etc. It is also not excluded that the string results from a multi-step input process, and/or a process in which the user was assisted (in an automated manner) in providing the string, for instance using an auto-complete mechanism suggesting and/or providing a word similar to and/or including what a user has typed. It is also not excluded that receiving the string from a user already involves a certain level of (pre-)processing, for instance that the string results from transcribing an audio input.

The proposed method further comprises using the string to identify at least one point-of-interest, POI, and identifying a geospatial location corresponding to the at least one identified POI as the at least one geospatial location. It is noted that, in embodiments, not all user inputs are intended to result in the identification of a POI. In particular, a user may simply wish to find a specific address. Therefore, it may be considered to employ a filtering mechanism to quickly identify strings that correspond to addresses - a straightforward heuristic may for instance be used to determine whether the string includes any numerals, wherein a string including a numeral is considered likely to indicate and/or include an address. In other embodiments, the search may be limited, e.g. by a user setting, to a POI search. In further embodiments, the user input may be used for identifying at least one POI and identifying other locations, e.g., in case the user input does not unambiguously relate only to a POI search. Embodiments of the present disclosure are concerned with a POI search, but do not exclude that other searches, e.g. address searches, are executed as described above. Specifically, in the method of the first aspect, using the string comprises querying, based on at least part of the string and a predetermined plurality of POI categories, a large language model, LLM, for output relating to identification of at least one POI category label. It is noted that this does not correspond simply to asking an LLM to itself identify at least one geospatial location based on a user input. Rather, it is proposed to prompt a LLM with a specific instruction to identify at least one POI category label appropriate (or likely to be appropriate) for at least parts of the received string.

In embodiments, querying, based on at least part of the string, the LLM for output relating to identification of at least one POI category label may comprise providing a predetermined plurality of POI categories to the LLM.

Examples of POIs include gas stations, hotels, restaurants, super markets, etc. In this disclosure, the term "POI category" is used for an abstract category associated with certain POIs, whereas "POI category label" is generally used for a term identifying this category. "Term", here, may be a single word or a combination of several words (wherein a "word" may be an abbreviation/acronym). For a given POI category, there may be a plurality of POI category labels, for instance including alternate spellings, synonyms, and/or translations into other languages. Often, one of the POI category labels for a certain POI category is selected from the POI category labels and used to refer to the POI category . In this description, such a selected term or label will be used when discussing the corresponding abstract POI category, for purposes of legibility. For instance, the POI category loosely defined as "establishment where you can buy and drink a cup of coffee or tea" could have the POI category labels "café", "coffee shop", "tea house" etc. Assuming the selected POI category label is "café", we will refer in this application to "the POI category 'café'". However, on a database level this may well be implemented differently, for instance with POI categories being assigned some kind of identifier not carrying any linguistic meaning in itself. Note that not all POI category labels for a given POI category need to correspond to a term which can be used linguistically to identify such POls: further POI category labels may include terms which could conceivably be used as search terms by users searching for this POI category, e.g. "coffee", "tea", "latte", "cappuccino", and so on and so forth. Some POIs may be associated with several categories; e.g., a gas station may obviously fall under the category "gas station ", but also under the category convenience store if it includes a shop. Depending on its offering, an establishment may simultaneously fall in the POI categories "restaurant", "bar", and "café". Furthermore, at least some of the POI categories could be interrelated, for instance in a hierarchical manner. As an example: the POI categories "hotel", "motel" and "bed-and-breakfast" could be seen as sub-categories of the POI category "accommodation". Any POI associated with any of the POI categories "hotel", "motel" or "bed-and-breakfast" will then be associated (either explicitly or implicitly) with the POI category "accommodation".

The POI category labels may also include translations of at least some POI category labels into at least one other language.

The foregoing, in particular the specific examples, is presented not to limit the disclosure, but to provide context for understanding the description, and facilitate a real-world interpretation.

In embodiments, providing a predetermined plurality of POI categories to the LLM may comprise providing, for each POI category, at least one POI category label. For instance, one POI category label could be provided for each POI category. Additional POI category labels (including for example synonyms and/or translations) could be provided, but depending on the LLM may not yield significantly improve performance, since LLMs are often already, through their training, "aware" if two terms are often used to indicate the same thing.. The predetermined plurality of POI categories may be provided as part of a prompt, or could be provided at an earlier point in time, e.g. provided in an earlier prompt to the LLM or coded into the LLM. Furthermore, in addition to the POI categories, at least one special label (such as "null", "not a category", etc.) could be provided as possible output for the LLM indicating that the part of the string provided to the LLM is not deemed to correspond to a POI category. Such a special label could (alternately or additionally) be used when the LLM is not able to provide a category label. Furthermore, it is noted that the predetermined plurality of POI categories can be updated over time (as can the associated plurality of POI category labels). One possible manner of doing so will be described at the hand of the second aspect, below. Such an updated plurality of POI categories may be provided to the LLM.

Using the string, in embodiments of the method of the first aspect, may comprise extracting, from the output of the LLM, at least one candidate POI category label; and identifying the at least one POI based on the at least one candidate POI category label. Because LLM models are often designed to communicate with a user through natural language, the output of such models may be quite verbose and contain extraneous text, for instance introducing the answer ("the category most closely corresponding to your input is") or proposing additional steps ("would you like to know more?"). Extracting, from the output of the LLM, at least one candidate POI category label may therefore comprise isolating at least one word or group of words from the output deemed likely to correspond to a category label. This may be done by deleting commonly used extraneous text; by filtering out words unlikely to contain meaning such as articles and pronouns; by searching the output for POI category labels; by executing a further LLM query to narrow the output down etc. It is not excluded that several candidate POI category labels could be extracted, nor that some of these candidate POI category labels could overlap to some extent.

In embodiments, identifying the at least one POI based on the at least one candidate POI category label may comprise determining whether the at least one candidate POI category label corresponds to at least one POI category of the predetermined plurality of POI categories. For instance, each of the at least one candidate POI category label may be compared to a list of existing POI category labels, wherein each POI category label is associated with an existing POI category. The list may include at least one POI category label for each one of the predetermined plurality of POI categories, but advantageously includes additional POI category labels for at least some POI categories. In particular, it is noted that, if the LLM is provided with the predetermined plurality of POI categories as described above, the list of existing POI category labels need not correspond one-to-one to what was provided to the LLM. After all, a LLM may well respond to the prompt "is this a coffee shop" with the answer "yes, this is a café". A candidate POI label can be said to correspond to an existing POI category label (and thus to the associated POI category) at least if the candidate POI category label matches an existing POI category label exactly; however, it is noted that a candidate POI category label may be determined to correspond to an existing POI category label even if the match is not exact, for instance if there are small differences in spelling ("harbor" vs. "harbour") or typography ("café" vs. "cafe"). This avoids having to include in the list POI category labels for all possible variants of a term in the list of POI category labels, and may further account for the fact that many current LLMs are known to deviate from instructions, and may well respond to the prompt "is this green or grey" with "this is gray" (using American English rather than British English). Known techniques for "fuzzy search" may be applied in assessing whether the extracted candidate POI category label corresponds to an existing POI category label. Alternatively or in addition, in instances, a follow up query may be executed to clarify the output.

Optionally, the method further comprises, in response to determining that the at least one candidate POI category label corresponds to at least one of the predetermined plurality of POI categories, identifying the at least one POI based on the at least one corresponding POI category of the predetermined plurality of POI categories. For instance, if the candidate POI category label corresponds to an existing POI category label, a POI database may be searched for at least one POI associated with the POI category corresponding to that POI category label. In most cases, there will be several POIs associated with a POI category. The different results may be ranked based on various factors. Examples include (but are not limited to): (a distance from) a current location, (a distance from) the location of at least one previous search; (a distance from) a user-specified location, the relative relevance/popularity of a geographical area where a POI is located; user preferences; etc.

Furthermore, part of the string received from the user may be taken into account to filter and/or rank the results. For instance, if the string also includes the name of a town or city, POIs in this town or city could be prioritized.

In a number of cases, the output of the LLM will be - at least mostly - in line with the instructions: e.g., the LLM instructed to identify whether "X" corresponds to POI category "A", "B" or "C" provides an output corresponding to or including "A".

However, as mentioned, LLMs are not always "obedient" to such an extent, and the output may in cases correspond to "D" - in the context of LLMs, this is commonly termed a hallucination. Often, such hallucinations are treated as errors, and discarded.

However, in examples, the method advantageously further comprises, in response to determining that the at least one candidate POI category label does not correspond to at least one POI category of the predetermined plurality of POI categories, identifying the at least one POI by searching a POI database and/or map database based on the candidate POI category label.

In some cases, a hallucination may indicate a gap or incompleteness in a POI database, but may be able to lead to a relevant result. For instance, let's take the example where a user searches for "Picasso". In this example, this may not be an existing POI category label or a keyword corresponding to a POI category, so a simple search of prior art would only yield results for instance for streets named after the artist. It could be that querying, based on "Picasso", a large language model, LLM, for output relating to identification of at least one POI category label yielded "museum". "Museum" may well be an existing POI category label. However, it may also return "art". In this example, this is not an existing POI category label, however relevant results may still be found by searching a POI database and/or map database based on the term "art", since the word will likely be present in the name and/or descriptions of museums as well as galleries, art schools, etc. Note that such searching may be done in addition to and/or in combination with searching the POI database and/or map database based on the original search string, here. "Picasso".

In view of the cost and computational effort involved in each LLM query, a database may be maintained storing the combination of LLM input and (POI candidate label extracted from the) output, i.e. here "Picasso" and "art". Should the query "Picasso" be received again, it could be considered to retrieve the output "art" from the database rather than querying the LLM once again. Accordingly, embodiments of the first aspect may enable a reduction of computational effort and, correspondingly, reduce energy consumption. Note that since LLMs are non-deterministic (that is to say: the same input does not necessarily lead to the same output) - it could also be considered to query the LLM with the same input a maximum of n (with n a predetermined integer number) of times, and storing each resulting candidate POI category label for later use.

The method may further comprise providing data for displaying to a user the at least one identified POI in a selectable manner, optionally in combination and/or grouped with the corresponding candidate POI category label. There are various ways to do so on a graphical user interface. For instance, a candidate POI category label used for identifying at least one POI may be displayed in a way that visually distinguishes it from a label for an existing POI category used in other cases, e.g. by employing a different color, transparency, grouping, tagging, and/or style. Accordingly, embodiments of the first aspect may enable an objectively better way to present search results to the user as the user can identify search results based on a candidate POI category label, even in cases where the data in the POI database did not comprise a corresponding POI category label, enabling the user to objectively better conceive the presented information.

The method may further comprise, in response to receiving a selection of one of the at least one POI identified by searching a POI database and/or map database based on the candidate POI category label, storing data indicative of an association between the selected POI and the corresponding candidate POI category label, e.g. in a data storage. The selection of such a POI, in particular in cases where it was displayed alongside geospatial locations derived from the user query in a different manner, can be an indication that the particular POI was indeed relevant to the original string received from the user.

In response to determining that the at least one candidate POI category label does not correspond to at least one POI category of the predetermined plurality of POI categories, the method may comprise providing data for displaying to a user the at least one candidate POI category label in a selectable manner. The method optionally then further comprises, in response to receiving a selection of at least one displayed candidate POI category label, providing at least one POI corresponding to the selected candidate POI category label. In such a case, it could be considered (either directly, or later based on a statistical analysis of aggregate results) to add the candidate POI category label to the existing POI category labels. Accordingly, embodiments of the first aspect may enable supplementing existing POI information with additional data points; correspondingly, the POI information can be at least partially maintained in an automatic way.

In embodiments, there may be cases where identification of a suitable POI does not require the LLM.

For instance, in embodiments, using the string for identifying at least one POI may further comprise determining whether at least part of the string satisfies a matching criterion with at least one of a predetermined plurality of POI categories, wherein optionally each POI category is associated with at least one POI category label.

In embodiments, querying the LLM for output relating to identification of at least one POI category label may only be performed in response to determining that the string does not satisfy the matching criterion. Accordingly, in embodiments, querying the LLM when simpler (and thus computationally more efficient) methods do not yield results may further assist in minimizing computational effort and, hence, amongst others, energy consumption.

Furthermore, in response to determining that at least part of the string satisfies the matching criterion for at least one POI category, the method may comprise identifying the at least one POI based on the at least one POI category. In this way, the existing category labeling may advantageously be used, when possible, whether this is instead of or in addition to using the LLM. It is noted that many techniques for the assessment of the matching criterion will be faster and/or computationally more efficient (and thus less costly) than querying the LLM. Therefore, it may be advantageous to use the matching criterion to determine in a fast, efficient way if the string can be processed/interpreted without the LLM, or if the string may be more difficult to disambiguate.

To illustrate the above, the below table shows, for a few different techniques, the response time and precision when tested on a set of 25 purposefully ambiguous (English-language) queries, meaning that the tokens in these queries did not match any existing POI categories or POI category labels:

| Technique | Response Time | Precision |
|---|---|---|
| Simple matching | 128 ms | 8% |
| Fuzzy matching | 410 ms | 24% |
| GPT4-32k | 2546 ms | 80% |
| GPT 3.5 Turbo | 853 ms | 84% |
| Vector indexing | 85 ms | 36% |

Determining whether at least part of the string satisfies a matching criterion with at least one of a predetermined plurality of POI categories may be done in various ways (used independently or in combination).

For instance, determining whether at least part of the string satisfies a matching criterion with at least one of the predetermined plurality of POI categories may comprise identifying, for each POI category label, whether there is a correspondence between the POI category label and at least part of the string. The matching criterion may then be whether there is a correspondence between at least part of the string and at least one POI category label. Note that while a "correspondence" may be considered to exist when there is an exact match, this is not in all cases (and in fact is often not) required. As described in the context of determining whether the at least one candidate POI category label corresponds to at least one POI category of a predetermined plurality of POI categories, various "fuzzy search" methods may be employed here as well.

Additionally or alternately, determining whether at least part of the string satisfies a matching criterion with at least one of a predetermined plurality of POI categories may comprise calculating, for each POI category of the predetermined plurality of POI categories, a similarity parameter between the string and the POI category. The matching criterion may then be whether the similarity parameter exceeds a threshold for at least one POI category.

Additionally or alternately, determining whether at least part of the string satisfies a matching criterion with at least one of a predetermined plurality of POI categories may comprise converting at least part of the received string into a search vector, calculating distances between the search vector and vector representations of the predetermined plurality of POI categories. This is a known way of assessing semantic similarity. The matching criterion may then be determined based on the number of POI categories for which the distance does not exceed a threshold.

In cases where several of the described techniques for assessing the matching criterion are used in combination, they could be performed simultaneously and/or in parallel. However, they could also be performed in an at least partially hierarchical and/or dependent fashion. For instance, it could be considered to assess whether there is an exact match to an existing POI category label first; "fuzzy matching" could be assessed next or at the same time, but could also be assessed only if and once it is determined that no exact matches exist. Vector indexing, a generally slower and/or more computationally intensive technique than the simple matching (though still generally faster and/or less computationally intensive than an LLM query) could be performed next or in parallel or only if the initial matching fails. Other combinations and/or dependencies could be considered to achieve a desired balance between speed, accuracy and completeness.

Note that for any or all of the matching techniques, the matching criterion may be assessed for a single POI category label per POI category or for several/all POI category labels associated with the POI categories. Similar or different thresholds or threshold values for different matches or matching techniques can be applied.

In an embodiment, using the string may further comprise, in response to the output from the LLM indicating a failure of the identification of at least one candidate POI category label, identifying at least one POI by searching a POI database and/or map database based on at least part of the string. Even in cases where some kind of filtering takes place to identify queries that likely do not indicate a POI category, it may be that the string provided to the LLM for identification of at least one POI category label does not include and/or indicate a possible POI category, but instead for instance relates to an address or to a POI name. The LLM may also simply fail to identify a suitable candidate POI category label. In such a case the output may not be meaningful or useful. In embodiments, it may be advantageous to identify cases where the LLM output did not yield meaningful results.

One possibility to determine whether the output from the LLM indicates a failure of the identification of at least one candidate POI category label may be to check whether the output corresponds to and/or includes a word, as well as potentially performing some type of semantic analysis, e.g. by checking whether extracting, from the output of the LLM, at least one candidate POI category label has failed. Alternatively or in addition, one could provide instructions to the LLM to indicate in a specific manner a failure of the identification of at least one POI category label. This may be done together with the instructions to identify a candidate POI category label and/or may be done using some type of prior instruction/coding. The indication could involve using a certain term (e.g. "not a category"), code ("404"), or any alternative solution allowing such output (e.g. failure) to be simply identified. E.g., a label "not a category" could be provided to the LLM together with the plurality of predetermined plurality of POI categories, for example as part of the prompt In response to the output from the LLM indicating a failure of the identification of at least one candidate POI category label, it may still be possible to identify at least one POI by searching a POI database and/or map database based on at least part of the original search query. For instance, at least part of the string may correspond to a POI name.

Note that even in cases where at least one POI is successfully identified based on the output of the LLM, in embodiments using the string additionally comprises the identification of at least one further POI based on at least part of the string, e.g. by searching a POI database and/or map database based on at least part of the string. The method may comprise providing data for displaying the at least one geospatial location to a user. Optionally, the method may further comprise displaying at least one geospatial location to the user based on the provided data. Note that in embodiments, this will comprise displaying a plurality of geospatial locations for a user to choose from, as well as further elements allowing a user to further refine the results. Such a plurality of geospatial locations may include geospatial locations identified using different ones of the techniques described herein, including but not limited to: querying an LLM for output relating to identification of at least one candidate POI category label and identifying at least one POI based on the at least one associated candidate POI category; querying an LLM for output relating to identification of at least one candidate POI category label and searching a POI database and/or map database based on the at least one candidate POI category label; determining whether at least part of the string satisfies a matching criterion with at least one of a predetermined plurality of POI categories and identifying at least one POI based on the at least one POI category satisfying the matching criterion; and searching a POI database and/or map database based on at least part of the string. Furthermore, the data provided for display may, for some or all of the geospatial locations, include an indication of their source, i.e. of the technique and/or terms which led to the particular geospatial location being identified.

Providing data for displaying the at least one geospatial locations to a user may comprise providing data for visually indicating, for at least one of geospatial location, that the geospatial location was identified based on a POI category. Visually indicating that a geospatial location was identified based on a POI category may comprise visually indicating, for each geospatial location identified based on a POI category, a visual indication of the POI category. This may be done by displaying the indicative label of the POI category, using a color-coding and/or other visual coding, and/or using symbols indicating the nature of the POI category (e.g. a knife and fork to indicate "restaurant", a coffee cup to indicate "café", a note of currency to indicate "ATM" etc.). Furthermore, in embodiments, predetermined POI categories (or POI category labels) may be visually distinguished from candidate POI category labels not corresponding to one of the predetermined plurality of POI categories or corresponding POI category label, since the latter are more speculative, and are not (yet) associated to a POI as a POI category/ies in the POI database. For instance, a color-coding may be used, either for the term itself or for a GUI element displaying the term.

Alternately or additionally, when (in cases where) a plurality of geospatial locations are identified, providing data for displaying at least one geospatial location to a user may comprise providing data for grouping and/or ranking this plurality of geospatial locations in accordance with the corresponding POI category.

Alternately or additionally, the method may comprise providing data for displaying, in a selectable manner, a visual indication of at least one POI category and/or candidate POI category label identified using the string, and, in response to receiving a selection of a POI category or candidate POI category label, identifying at least one geospatial location based on the selection and providing data for displaying the at least one geospatial location. Optionally, the method may further comprise displaying the visual indication in a selectable manner based on the provided data. This may provide a way to "validate" an identified POI category (or candidate POI category label) prior to identifying corresponding geospatial locations. It is noted that identifying at least one geospatial location based on at least one POI category and/or candidate POI category label identified using the string may already be performed or at least partially performed prior to receiving the selection of a POI category or candidate POI category label. In response to receiving a selection of a POI category or candidate POI category label from a user, data is provided for displaying the at least one geospatial location identified based on the selection. This way, a response time may be decreased. It may be advantageous to cause a visual distinction, for instance via color-coding, between how "existing" POI categories and candidate POI category labels (not clearly corresponding to any existing POI category) may be displayed.

Alternately or additionally, when a plurality of geospatial locations are identified, providing data for displaying the plurality of geospatial locations to a user may further comprise providing data for displaying, in a selectable manner, at least one POI category corresponding to at least one geospatial location of the plurality of geospatial locations and/or a candidate POI category label used to identify at least one geospatial location , wherein optionally in response to receiving a selection of s POI category or candidate POI category label, the method further comprises filtering and/or reranking the plurality of geospatial locations based on the selected POI category or candidate POI category label. The POI categories may be displayed in various manners, including using symbols and/or color-coding, and/or a visual distinction may be made between how "existing" POI categories and candidate POI category labels (not clearly corresponding to any existing POI category) are displayed. Note that in case the results to be displayed are obtained using at least two different techniques, in embodiments statistics regarding the selections by a user may be compiled, and optionally such statistics may be used for ranking/filtering/ordering later results. This may be done on in a global manner and/or in a user-specific manner based on user-specific selections and/or for groups of users having been grouped together based on e.g. search behavior and/or other characteristics.

The method may comprise providing data for displaying the identified at least one geospatial location to a user in a selectable manner and, optionally, displaying the identified at least one geospatial location to a user in a selectable manner based on the provided data. The method may further comprise, in response to receiving the selection of a geospatial location, providing data indicative of instructions for navigating to the selected geospatial location. Such instructions could comprise routing and guidance instructions for a driver of a vehicle or a pedestrian, such instructions can also comprise routing instructions for an autonomous and/or assisted driving system. The method may furthermore comprise displaying the instructions to a driver of a vehicle or a pedestrian, e.g. via a display screen, and/or providing the instructions to an autonomous and/or assisted driving system.

In a second aspect, the disclosure relates to a method of updating point-of-interest, POI, information. The method may use a POI database in which a plurality of POIs are associated with at least one of a predetermined plurality of POI categories. Such a POI database may also include at least part of the POI information. The POI information includes at least one POI category label associated with each POI category. The method comprises accessing a data storage obtainable e.g. by the method described in the context of the first aspect. The method further comprises, for a given candidate POI category label determining a frequency of occurrence in the POI database of at least one of the pre-determined plurality of POI categories associated with POIs with an association to the candidate POI category label stored in the data storage. In response to determining that the frequency of occurrence satisfies a first criterion, the method comprises adding the candidate POI category label as a POI category label associated with at least one of the pre-determined plurality of POI categories. Furthermore, in response to determining that the frequency of occurrence satisfies a second criterion, the method comprises adding the candidate POI category label to the database as a new POI category, in particular a POI category label corresponding to a new POI category, and associating the new POI category to the POIs with an association to the candidate POI category label stored in the data storage.

This second aspect is based on the insight that hallucinations by a LLM, or at least some output not strictly satisfying the instructions, may be advantageously used to enrich/update a pre-existing database, thus turning a bug into a feature.

In embodiments, a data storage is used as described previously in the context of the first aspect, in particular one storing, in cases where a user has selected a POI found based on a candidate POI category label from an output of the LLM not corresponding to a pre-existing POI category label, at least the selected POI and the corresponding candidate POI category label. Further details may also be stored, in particular the original search string.

By gradually accumulating and analyzing data about user responses to POIs identified based on LLM output and updating the POI database (or other POI information), new labels can be identified and new categories can be discovered. Gradually, in particular if used in combination with a log of LLM inputs and output (e.g. as described), this may lead to an increasing percentage of strings leading to identification of POIs likely to be selected by a user *without* requiring the further use of an LLM. In such a way, the LLM can help make itself less necessary, and may increase the relevance of search results even for future user queries.

The methods of the first and second aspects are computer-implemented methods. They can be implemented on different types of computing systems, in particular the systems of the fourth aspect.

In a third aspect, a computer program product is provided comprising instructions which, when the program is executed by a computer, cause the computer to carry out the steps of the method according to the first and/or second aspect. Such a computer program product may comprise a computer-readable, non-transitory storage medium of the fifth aspect.

In a fourth aspect, a system is provided comprising at least one integrated circuit, the system configured to perform the method according to the first and/or second aspect.

The system may be a server such as a traffic information server and/or distributed computing system such as a computer cloud. In embodiments, the computing system may comprise a client and a server wherein method elements of displaying data or providing instructions may be performed at the client and other method elements are performed at the server. The client can be a mobile device such as a smart phone, an on-vehicle computing device, or the like. The server can be a traffic server and/or a distributed computing environment by itself.

In a fifth aspect, a computer-readable, non-transitory storage medium is provided having stored thereon instructions which, when executed by a system comprising at least one integrated circuit, in particular the system of the fourth aspect, cause the system to carry out the method according to the first and/or second aspect. Such a computer-readable, non-transitory storage medium may include a hard disk, an internet/cloud storage, a memory drive, a CD-ROM, and any kind of computing system including the ability to store data in a computer-readable, non-transitory way.

### Brief description of the figures

The invention will be further elucidated at the hand of the figures, wherein:
Fig. 1 is a block diagram illustrating the various elements that may be used in performing a method in accordance with the disclosure;
Fig. 2, 3, 4 and 5 are flowchart illustrating various examples in accordance with the first aspect;
Fig. 6 is a flowchart illustrating an example in accordance with the second aspect;
Fig. 7 is a system diagram showing elements of an exemplary system in accordance with the disclosure;
Fig. 8 shows an example screen that may be displayed in the context of the proposed method,
Figs. 9A and 9B show further example screens for a same user input, wherein Fig. 9B illustrates a possibly improved situation based on LLM use.

### Detailed description of the figures

It is noted that throughout the figures, like numbering is used for like steps or elements, and descriptions of these steps or elements will not always be repeated; description of a step or an element in the context of one figure can be considered applicable in other figures including this step or element, barring statements to the contrary.

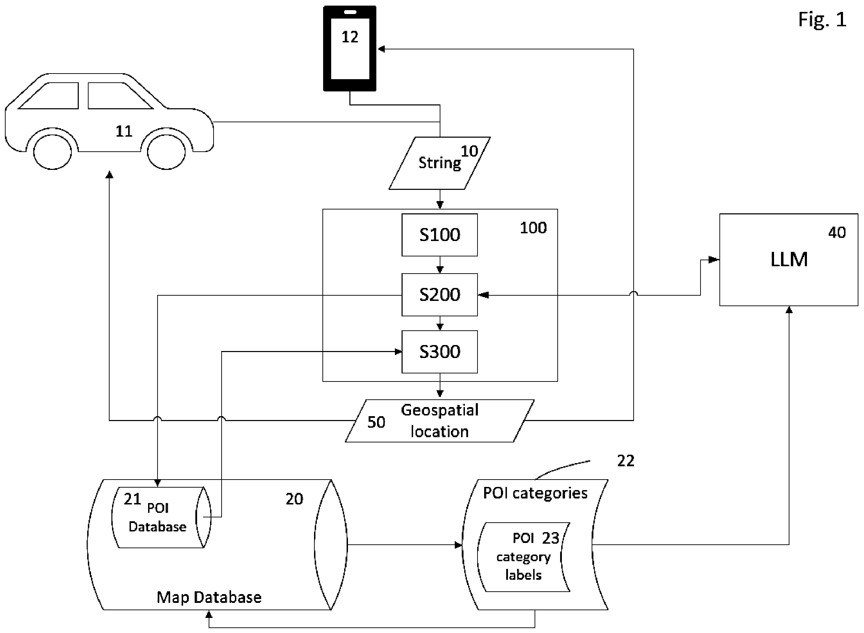

Fig. 1 is a block diagram illustrating various elements that may be used in performing a method in accordance with the disclosure.

Methods described herein may be aimed at identifying at least one geospatial location based on a user input, for instance in the context of navigation input. Such user input may for instance be received from a vehicle 11, specifically a navigation system in a vehicle, but may also be received on a smartphone 12 or other wireless personal device, or from yet other sources. The disclosure is not limited to any specific source, nor is it limited to a particular input method, as long as a string 10 is, directly or indirectly, received from a user as the user input in step S100. A string, here, can be interpreted as a certain number of characters, such that the string has sufficient length to attribute meaning thereto with at least a certain likelihood. It may for instance include at least one word, but the proposed method is configured such that successful results can in certain cases also be achieved if the string includes only a partial and/or misspelled word. The string may also (additionally or alternately) comprise other characters, for instance numerals.

String 10 is then processed by a processing module 100. Processing module 100, which may be embodied on various types of computing systems, may be implemented on the same device receiving the user input - e.g. vehicle 11 or smartphone 12 - in which case string 10 is received directly from the input means on this device that the user interacts with. Processing module 100 may also (alternately or additionally) be implemented on a separate device, which then receives string 10 via some kind of communication channel at step S100. It could also be considered to perform certain steps on the device receiving the user input, and others on a separate device.

At S200, string 10 is used for identifying at least one point-of-interest or POI. To this end, processing module interacts with POI database 21 (also referred to as POI DB elsewhere in the figures for efficiency). In the figures, POI Database 21 is depicted as part of map database 20; however, the POI database could also be a separate database, optionally linked to the map database. The POI database (or at least a copy of the POI database) could be stored on the same device on which processing module 100 is implemented, but this is not required, as long as processing module 100 can retrieve data from POI database 21.

S100 may include (pre-)processing string 10. For instance, it could be assessed whether string 10 includes the name of a city. In such a case, the name of the city could be filtered out, and/or the name of the city could be used at a later stage to filter/select a plurality of POIs.

S200 comprises, at least for certain user inputs, querying a large language model 40 based on at least part of string 10 and a predetermined plurality of POI categories 22, for output relating to identification of at least one POI category label. While it is not excluded that LLMs may at some point be optimized such that they can (at least partially) be implemented on personal devices, such as vehicle 11 or smartphone 12, the large computational power necessary for such queries generally necessitates LLM 40 being implemented on a remote server. Processing module 100 could be implemented on this server. Processing module may also interact with LLM 40 by sending queries, so-called "prompts", to LLM 40 and receiving LLM output in response. This "prompt" here typically comprises not only (at least part of) string 10, but also the indication that output relating to identification of at least one POI category label is sought. In particular, the querying of LLM 40 is based on at least part of string 10 and a predetermined plurality of POI categories 22. This predetermined plurality of POI categories 22 is preferably comprised of the POI categories occurring in POI Database 21. POI categories 22 may be derived from POI database 21, and may optionally be stored as part of POI database 21. It may be efficient to store POI categories 22 on the same device that implements processing module 100, as the storage capacity required is likely limited. Each POI category of the predetermined plurality of POI categories 22 may be associated with at least one POI category label of POI category labels 23, as described previously.

Querying the LLM may help in particular to disambiguate the more difficult and/or exotic queries. It may further help process user queries which are in less frequently used languages which are not accounted for (yet) in another way, for instance through inclusion of translations in the list of POI category labels 23.

S200 leads to identification of at least one POI. It is noted that other factors may also be used in identification of at least one POI, in particular to select, from a plurality of POIs identified using the string, at least one POI estimated to be likely to correspond to the user input. Factors could be the current location of the user; previous user behavior; a currently displayed section of a map; relative popularity of POls, etc. Should more than one POI be identified, such factors may also (additionally or alternately) used to rank these POIs.

Further details about S200 will be elucidated at the hand of further figures.

At S300, the geospatial location(s) 50 corresponding to the at least one identified POI are identified as the at least one geospatial location. In particular, at least one address and/or latitude/longitude for an identified POI can be retrieved from map database 20. Further geospatial locations may also (additionally or alternately) be identified at this step.

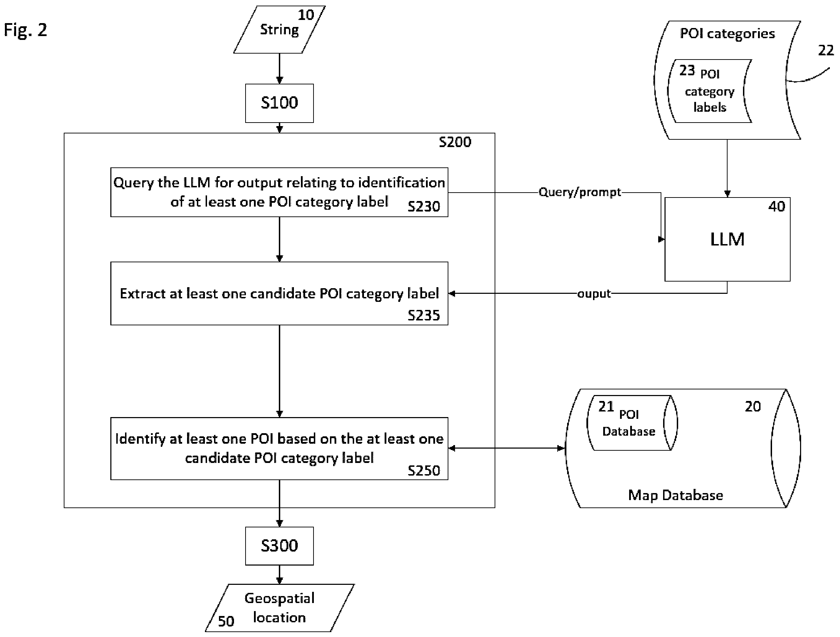

Fig. 2 is a flowchart which illustrates possible steps involved in querying LLM 40. In particular, at S230, LLM40 is queried for output relating to identification of at least one POI category label. To this end, LLM may be provided with the predetermined plurality of POI categories 22, optionally including POI category labels 23. LLM 40 may separately be provided with POI categories 22 and optionally category labels 23. POI categories 22 and optionally category labels 23 may have been provided (/hard-coded) at some earlier stage. Furthermore, while Fig. 2 shows an arrow from POI categories 22 to LLM 40, POI categories 22 may be provided as part of a prompt sent to LLM40 as part of the querying of S230.

In response to the query/prompt, LLM 40 provides an output. This output may comprise at least one POI category label corresponding to one (or more) of the predetermined plurality of POI categories 22, but due to unpredictability of LLMs, this is not certain. Furthermore, it may comprise additional elements.

At S235, at least one candidate POI category label is extracted from the output. This may be done in various ways, for instance by filtering out common introductory and/or concluding terms and phrases.

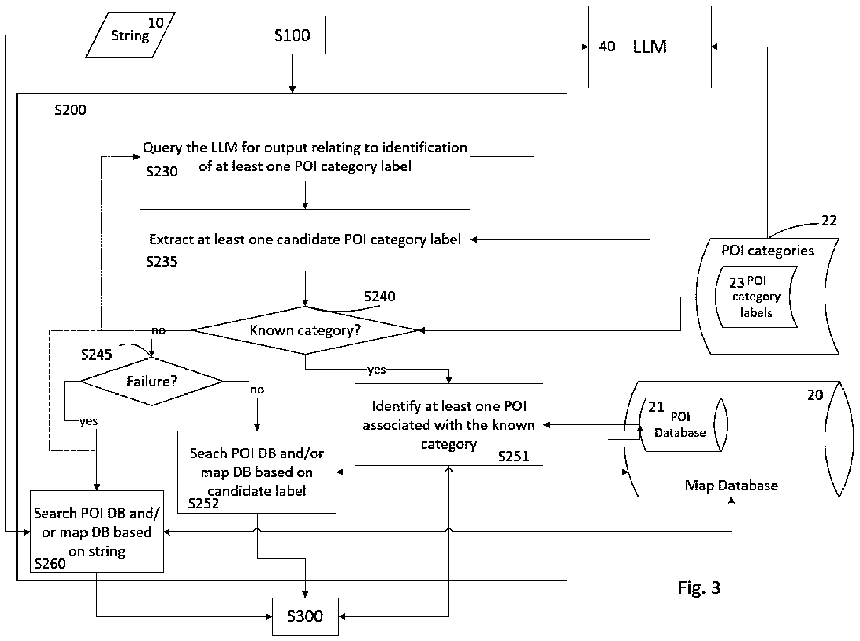

At S250, the extracted candidate POI category label(s) is/are used to identify at least one POI. The flowchart of Fig. 3 provides more detail on how S250 may be implemented.

In particular, at S240, it may be assessed whether the extracted candidate POI category label (or each extracted candidate POI category label, if there are more than one) corresponds to a known category. This can be done by comparing the extracted POI category with POI categories 22 and/or POI category labels 23. It is noted that a comparison with POI category labels 23 may be useful even if LLM 40 was provided only with POI categories 22 and not with POI category labels 23, since LLM 40 may output terms not explicitly indicated in a query or prompt, but for instance synonyms and/or linguistic variations on such terms.

An extracted POI category label may be said to correspond to an existing POI category and/or category label if it matches exactly, by checking the or each extracted candidate category label against the predetermined plurality of POI categories, preferably including the associated labels. This is computationally most efficient, but may not fully account for the fact that LLM outputs may not correspond exactly to one of the possibilities provided in the prompt or otherwise in advance, for example because the semantic context could lead to a grammatical variant being output ("restaurants" rather than "restaurant"), because a different spelling convention could be used ("harbor" vs. "harbour") or because the LLM deviates from the parameters of the prompt for some other reason. To account for this, some form of "fuzzy" matching may also be employed, so that such an approximate match can also be taken to indicate a correspondence. Sematic similarity measures as described later on could also be considered - in each case, the approach is preferably taken which most appropriately balances computational efficiency and accuracy for the particular implementation. This may also entail subdividing the assessment further, for instance by assessing an exact match first, and trying other matches only if no exact match is found. Furthermore, it is noted that the assessment at S240 need not be binary: a similarity criterion could be used indicating a degree of correspondence between an extracted POI category label and an existing POI category, and this similarity criterion could be output together with the (at least one) POI category deemed likely to correspond to an extracted POI category label. Such a degree of correspondence may for instance be useful in filtering, organizing and/or ranking eventually identified POIs and/or corresponding geospatial locations which are linked to a plurality of POI categories which are found to have at least some level of correspondence with an extracted candidate POI category label.

If at least one extracted POI category label is determined to correspond to an existing POI category of the predetermined plurality of POI categories 22, or to have a likelihood of corresponding to an existing POI category of the predetermined plurality of POI categories 22 exceeding a certain threshold, S250 may comprise, at S251, identifying at least one POI associated with this POI category, using POI Database 21. As most POI categories are likely to be associated with many POIs, various factors may be used to filter/select at least one POI. This includes the factors discussed previously. Additionally or alternately, a part of string 10 originally input by the user may be assessed to determine if it comprises information on the basis of which at least one POI could be selected. For instance, should string 10 include the name of a city, POIs in this city could be identified and/or given preferential ranking. Additionally or alternately, other elements of the LLM output could be used in determining a selection and/or ranking of POIs.

Using the extracted candidate POI category label(s) is/are to identify at least one POI, P250, may comprise searching, at S252, the POI database 21 and/or map database 20 based on the extracted candidate category label. Note that while in Fig. 3 this is shown to happen only if the (or each) extracted candidate category label is not a known category, this is not necessarily the case in every implementation. For instance, in a case where there are multiple extracted candidate category labels, only some of which are found at S240 to correspond to an existing POI category, the POI database 21 and/or map database 20 may be searched based on at least one of the extracted candidate category labels which were not found to correspond to an existing POI category. Additionally or alternately, in cases where S240 involves assessing a similarity criterion, it could be considered to use two thresholds: if an extracted candidate category label has a similarity criterion exceeding the higher threshold, at least one POI associated with the corresponding existing POI category could be identified; if the similarity criterion falls between the lower and the higher threshold, POIs could be identified both based on the corresponding existing POI category and by searching the POI database 21 and/or map database 20 based on the candidate category label; and if the similarity criterion falls below the lower threshold, only the search based on the candidate category label could be performed.

It could also be considered to search the POI database 21 and/or map database 20 based on the (or each) candidate category label regardless or if (and/or how close) it is found to correspond to a known category label, which may enrich the search results, and which could aid in updating the database along the lines of what will be described further on.

Optionally, using string 10 for identifying at least one point-of-interest or POI, S200, further comprises determining at S245 whether the output from the LLM indicates a failure of the identification of at least one candidate POI category label. It is noted that while Fig. 3 shows the determination of a failure as a step that takes place if, at S240, it is determined that the (or each) extracted candidate POI category label does not correspond to a known POI category (and/or POI category label), this is not necessarily the case in all implementations. For instance, the LLM could be provided with a specific "tag" or description to use in case the LLM itself determines it cannot successfully identify a candidate POI category label, such as "not a category", "404", etc. In such a case, assessing whether the (or any of the) extracted candidate POI category labels corresponds to a known POI category (and/or POI category label) could include assessing whether the (or any of the) extracted candidate POI category labels corresponds to this "failure" tag or description. This could be done instead of, or in addition to, a separate failure assessment (which could involve a more sophisticated analysis of the extracted candidate POI category label) which may take place in case the extracted candidate POI category label does not correspond to a known category (or to the failure tag) at S240. Additionally or alternately, the determination of whether the output from the LLM indicates a failure of the identification of at least one candidate POI category label could take place prior to the extraction of at least one candidate POI category label at S235, and/or could result from the extraction of at least one candidate POI category label at S235 being deemed not to be possible (for instance if the LLM output consists of gibberish). Performing such a check at least in one stage of the process avoids non-useful output from the LLM leading to undesirable results.

To still be able to provide results in situations wherein no useful candidate POI category label are deemed to be present in the LLM output, i.e. to account for the possibility of the identification of at least one candidate POI category label failing, using string 10 for identifying at least one point-of-interest or POI, S200, may comprise searching the POI database 21 and/or map database 20 based on at least part of string 10 at S260.

In some embodiments, if it is determined at S240 that the extracted candidate POI category label does not correspond to an existing POI category label, it could be considered to query the LLM at least once more (S230) using the same input and/or the LLM output.

While Fig. 3 primarily indicates this taking place in case the extracted candidate POI category label or labels do not correspond to an existing POI category (and/or known POI category label), and/or in case the output from the LLM indicates a failure of the identification of at least one candidate POI category label, it is not excluded that such a search S260 could be performed in more or even all situations, where it would not be the only but could be one of the sources of a plurality of geospatial locations identified at S300 which are then filtered and/or ranked according to a multitude of factors.

For instance, string 10 could include the name of a specific POI, i.e. a name identifying a single/unique place (e.g. "Rijksmuseum"), rather than a name applicable to a sub-set of POIs in a certain POI category 22 (e.g. "Starbucks"). In the former case, the specificity in string 10 suggests a user may not be particularly interested in other museums; the POI may be identified by searching the POI database 21 (and/or map database 20) based on at least part of string 10 (S260). In the latter case, on the other hand, it may be advantageous to provide not only geospatial locations corresponding to Starbucks franchises, but also geospatial locations corresponding to other establishments serving (takeaway) coffee; therefore, in such cases, it may be advantageous to identify POIs both by searching the POI database 21 (and/or map database 20) based on string 10 as well as based on the POI category "café", wherein this POI category could for instance be identified by querying the LLM at S230, or - if the LLM was already previous queried based on the term "Starbucks"- from a log of previous LLM inputs and associated outputs.

It may be that string 10 received from the user was not intended to identify a POI category. In particular, string 10 could include (at least part of) an address. Therefore, the method may include, at S105, using heuristics to identify strings not indicating (or deemed less likely to indicate) a POI category. For addresses, such a heuristic may for instance involve checking if string 10 includes a number, and/or whether the syntax follows a common address syntax.

As previously mentioned, LLM queries are "expensive", in terms of time, energy, and computational requirements. Therefore, it may be advantageous to combine LLM queries with computationally more efficient methods to identify at least one POI using string 10.

The method may include, at S210, checking whether at least part of string 10 satisfies a first matching criterion with at least one of the predetermined plurality of POI categories 22. For instance, determining the first matching criterion may involve comparing string 10 to the set of POI category labels 23, preferably including at least one POI category label 23 per POI category 22. This may involve checking if there is an exact match between any POI category labels and (parts of) string 10; the matching criterion is then whether there is a correspondence/match between at least part of string 10 and at least one POI category label 23. A certain level of "fuzziness" could be employed to account for spelling variations/errors and the like. If at least one "match" is established, that is, if it is determined that at least part of string 10 satisfies the first matching criterion for at least one POI category label 23, at least one POI may be identified, the method may include at S225 identifying at least one POI of which the POI category 22 is associated with the at least one matching POI category label 23.

The method may include, at S220, checking whether at least part of string 10 satisfies a second matching criterion with at least one of the predetermined plurality of POI categories. Preferably, the second matching criterion is a more sophisticated matching criterion, which may be more computationally complicated to compute/assess but which may have a higher accuracy (in the sense of fewer false negatives) and/or be able to find more subtle similarities.

Determining whether at least part of string 10 satisfies the second matching criterion with at least one the predetermined plurality of POI categories 22 at S220 may include calculating, for each POI category of the predetermined plurality of POI categories 22 (and/or POI category labels 23), a similarity parameter between string 10 and the POI category 22. The second matching criterion may then be whether the similarity criterion exceeds a first threshold for at least one POI category 22. The method may comprise identifying at S225 the at least one POI based on the at least one POI category 22 for which the similarity criterion exceeds the first threshold. In the eventual filtering/ranking of the results, the value of the similarity criterion may be considered.

Determining whether at least part of string 10 satisfies the second matching criterion with at least one the predetermined plurality of POI categories 22 at S220 may include converting at least part of received string 10 into a search vector, and calculating distances between the search vector and vector representations of the predetermined plurality of POI categories 22. Such a vector indexing method for assessing semantic similarity is known, and will not be described in detail here. It is noted that if such a method if used, the vector indexing may be done on the basis of the POI categories 22 (for instance using the preferred POI category labels); considering all existing POI category labels 23 is unlikely to yield to better results, since POI category labels 23 associated with the same POI category 22 are likely to be semantically quite similar. If using vector indexing or another semantic similarity measure, the matching criterion may be determined based on the number of POI categories 22 for which the distance does not exceed a second threshold. If the distance is very small to a certain POI category, it is quite likely that useful results will be found based on this category; however, when using vector indexing or other semantic similarity measurements, it may also (additionally or alternately) be useful to take into account *relative* distances, which may indicate that a term may have an ambiguous meaning.

Optionally, such a semantic similarity measure could be used to update the list of POI category labels. For instance, in a case where a candidate POI category label does not satisfy the first matching criterion with any existing POI category labels 23 but is determined, in the assessment of the second matching criterion, to have a strong semantic similarity to / small vector distance from an existing POI category of the predetermined plurality of POI categories 22, it could be considered to add the candidate POI category label as a new POI category label for this POI category.

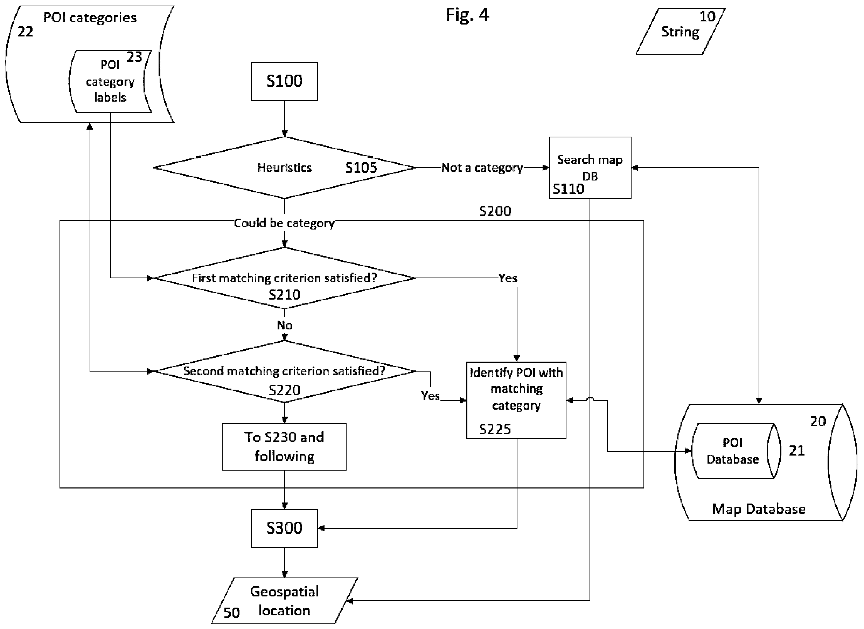

Fig. 4 shows an implementation in which determining whether at least part of string 10 satisfies the second matching criterion with at least one of the predetermined plurality of POI categories 22 is satisfied, S220, is in response to a determination at S210 that string 10 does not satisfy the first matching criterion with any of the predetermined plurality of POI categories 22, so for instance is only done if no part of string 10 has a clear correspondence with a POI category label 23. This may have the advantage of trying the least computationally efficient (and least sophisticated) method first, resolving a certain percentage of queries, and moving to gradually more complex methods only when necessary. However, it is also possible to assess only the first or only the second matching criterion (i.e. to omit S210 or S220); to perform both assessments in parallel, optionally interrupting the more complex assessment at S220 if a result can be found based on S210; or various other combinations/permutations.

Optionally, querying the LLM for output relating to identification of at least one POI category label, S230, is in response to determining that string 10 does not satisfy the first matching criterion at S210 and/or in response to determining that string 10 does not satisfy the second matching criterion. It may be advantageous to reserve the use of the LLM only to cases where a query string 10 could not be resolved using (faster and cheaper, but less creative) methods.

Additionally and/or alternately, prior to querying the LLM for output relating to identification of at least one POI category label at S230, a log of previous LLM queries could be consulted to see if a similar or same string has previously been used to query the LLM, and if so which output was returned.

However, in particular if it is considered important to augment the POI database 21, it is not excluded that the LLM may be queried even if prior analysis of string 10 already yields at least one POI category 22 which has a certain similarity to at least a part of string 10.

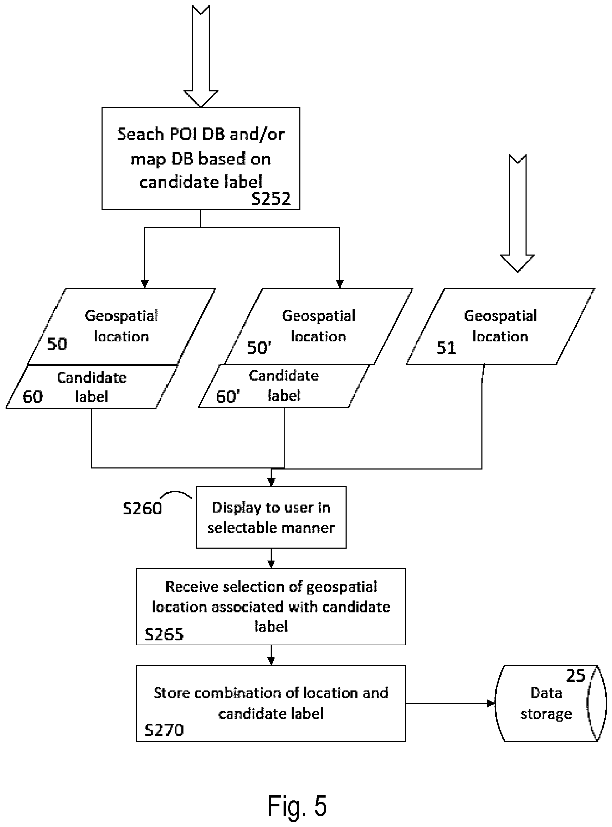

A method resulting in augmentation/updating/enriching of POI information, for instance as part of POI database 21, is illustrated further at the hand of Fig. 5.

Fig. 5 assumes that, by performing a method as illustrated in Figs. 1-4, a number of POIs have been identified based on a search string 10. In particular, in the situation depicted in Fig. 5, geospatial locations 50, 50', corresponding to respective POIs, have been identified by searching, at S252, the POI database based on a candidate label 60, 60' extracted from output from a LLM queried based on at least part of string 10. This may also include cases where the candidate label 60, 60' was extracted from LLM output at an earlier time and was later retrieved from a search log to identify the

particular POI/geospatial location 50/50'. Candidate labels 60, 60' could be a same label, or could be different labels. In addition, at least one other geospatial location 51 may have been identified using another method, for instance by searching the POI database 21 and/or map database 20 based on at least part of string 10.

A certain number of results may, at S260, be displayed to a user in a selectable manner. To this end, the method may involve selecting a plurality of geospatial locations (for instance based on the current location of the user, or any of a variety of factors) and providing data for displaying the selected plurality of geospatial locations to a user. It is noted that in a case where at least a part of the method is performed on a device provided with display and input capabilities, the displaying may be part of the method; however, it may be that data for displaying is provided, in a known manner, to a separate device comprising a display and input capabilities. Optionally, the corresponding candidate category label may also be displayed, to clarify to a user on what basis a certain POI was identified. Selection of a POI may for instance result in navigation instructions to this POI being provided, and/or in further information about the selected POI being provided.

A selection of geospatial location 50 or 50', i.e., of a geospatial location/POI identified by searching the POI database 21 or map database 20 based on a candidate POI category label extracted from LLM output, may indicate that the extracted candidate POI category label is indeed relevant to string 10, and/or that the extracted candidate POI category label is relevant for the identified POI. This is especially the case if such a geospatial location is selected from a set of geospatial locations also including geospatial locations identified without use of the LLM, since this may indicate an insufficiency in POI database 21 and/or in the existing list of POI categories 22 and/or POI category labels 23.

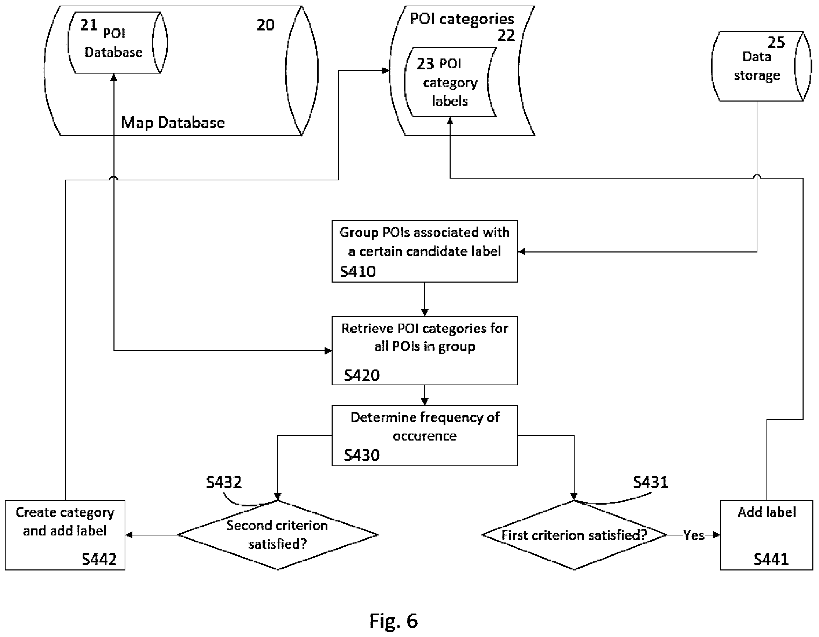

Therefore, the method may include, in response to receiving at S265 the selection of a geospatial location associated with a candidate POI category label, storing, at S270, data indicative of an association between the selected POI and the corresponding candidate POI category label in data storage 25. While it is depicted as a separate data storage in Fig. 5 and Fig. 6, data storage 25 could be included in POI database 21, map database 20, and/or be stored alongside POI categories 22 and/or POI category labels 23.

Fig. 6 illustrates a method of updating POI information, for instance POI database 21 (which directly or indirectly also entails updating predetermined plurality of POI categories 22), using such a data storage 25. Such a method can be performed once a method as described above has been performed a sufficient amount of times to populate data storage 25 to such an extent that the data therein can be analyzed. For instance, at least a part data storage 25 may be analyzed based on the number of entries for a certain candidate POI category label exceeding a predetermined threshold; alternately or additionally, the analysis could take place once data storage 25 reaches a certain size/number of entries as a whole, and/or periodically once a predetermined period of time has passed.

The method of updating the POI information may include, at S410, grouping POIs associated in data storage 25 with a certain candidate POI category label. This may include grouping POIs associated with the exact same candidate POI category label, but as described elsewhere, a certain level of fuzziness may also be employed, for instance to account for variant spellings ("harbor"/"harbour"). The method may then include, at S420, retrieving the corresponding POI categories from POI database 21 for all POIs in a certain group, and, at S430, determining a frequency of occurrence of these categories.

Note that further analysis may take place before, during or after these steps. For instance, data storage 25 could be deduplicated to remove instances where the same candidate POI category label led to the same POI/geospatial location - although, on the other hand, repeated selections could also be a useful indication, and it may be useful to weigh such repeated selections more heavily in the analysis.

The method may include, at S431, determining if a first criterion is satisfied. The first criterion may for instance be that a significant proportion (for instance a majority, or more than a certain threshold) of POIs associated in data storage 25 with a certain candidate POI category label 60, 60' are associated with a certain POI category. In such a case, it is likely that candidate POI category label is often used by users intending to find POIs of this category. The method may thus include, in response to the first criterion being satisfied, adding the candidate POI category label to the list of POI category labels 23 as a label associated with this POI category.

The method may include, at S432, determining if a second criterion is satisfied. The second criterion may be chosen such that it is satisfied in cases where there is no clear POI category corresponding to this label, but that a new category may be needed. The second criterion could optionally be that the first criterion is not satisfied.

More generally: once sufficient data is collected, statistical analysis may be used to identify potential new POI category labels and potential new POI categories. In particular, let us assume that the data storage includes n instances of a certain candidate POI category label, linked to m POIs selected by a user (with m and n integers, and m ≤ n). In an existing POI database, each of the m POIs may be associated with at least one existing POI category c. Each of these POI categories may occur cᵢ times. The frequency of occurrence can be indicated as cᵢ/m. It is also possible to calculate this frequency in a different manner, for instance by counting the categories each time a POI occurs, and relating the total number a category occurs to n.

If a high number of the m selected POIs is associated with a same category, e.g. if cᵢ/m exceeds a certain threshold (for instance 0.6, 0.7, 0.8, 0.9) and/or if it is significantly higher than cⱼ/m for other categories associated with selected results found based on this candidate POI category label, it may be that the candidate POI category label which led to these results is a useful new category label for that category cᵢ. The "first criterion" is preferably a criterion indicating that a certain candidate POI category label seems to yield successful results likely to be associated with an existing POI category. It may also be that the frequencies of occurrence do not indicate a clear one-to-one correspondence. It may be that the successful results correspond to several different categories. It could also be that the most frequent categories include two or more categories, for instance because a term has multiple meanings (cf. the Dutch "kapsalon", which means "barbershop" but is also the name of a popular fast food item) or because a term has a broad meaning encompassing several more specific sub-categories (e.g. "art", which could relate to "museum", "art gallery" and "art school"). The second criterion is preferably selected so as to identify such situations.

More complex statistical analysis may also be performed, for instance based on displayed but not selected POIs.

In another example, in cases where at least some POI categories are structured in a hierarchical manner, i.e. with some POI categories being subcategories of other categories, the second criterion may be (at least in part) based on a comparison of the frequency of a certain POI category and the frequency of sub-categories of this POI category. For instance, if we assume that the POI category "public transport stop" includes the sub-categories "bus stop" and "tram stop", it may be that a string leads to the LLM outputting "water taxi stop", and to POIs being identified and selected which have "public transport stop" as a category, but which are not associated with any of the existing sub-categories of this POI category.

In response to the second criterion being satisfied, the method may include, at S442, creating a new category in the POI database and associating the new POI category to the POIs with an association to the candidate POI category label stored in data storage 25. For instance, in the above example, the result could be the creation of the new POI category "water taxi stop" as a sub-category of the existing POI category "public transport stop". If POI categories 22 are stored as part of POI database 21, this automatically results in an update to the plurality of predetermined POI categories; if not, the method may include adding the new category to the predetermined plurality of POI categories 22 (or causing it to be added), with the candidate POI category label as an associated POI category label.

It will be appreciated that the methods described have been shown as individual steps carried out in a specific order. However, the skilled person will appreciate that these steps may be combined or carried out in a different order whilst still achieving the desired result.

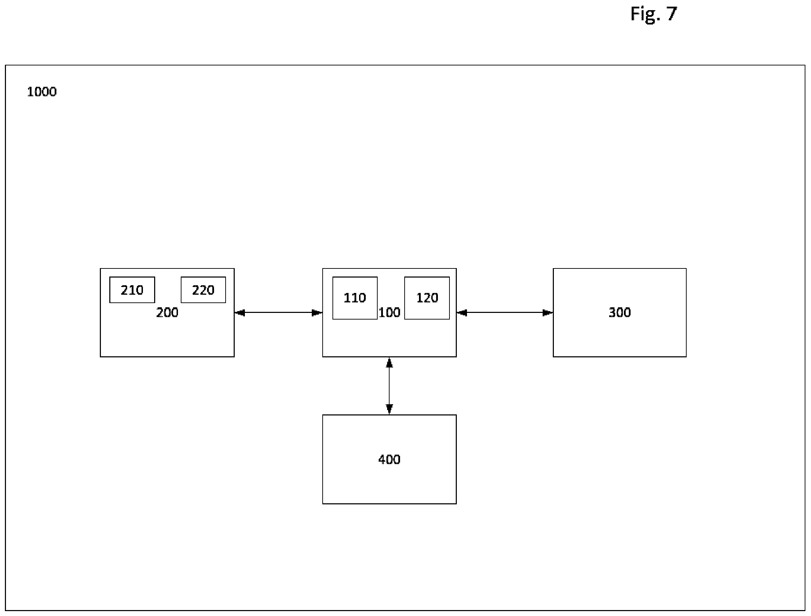

Fig. 7 illustrates the various components of a system 1000 to implement the methods described above. It is noted that the various components can be combined / may be collocated in various manners.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc., and including combinations of more than one such device, not necessarily of the same type. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

Returning now to the embodiment illustrated in Fig. 7, query module 100 is configured to analyze string 10 to identify at least one geospatial location. While it is depicted as a single module, it is not excluded that its functions are distributed over more than one computing device. String 10 is received at input/output module 200 - for instance a navigation system or smartphone - which comprises input module 210 and display module 220. Input module 210 is configured to receive the string and optionally to receive the selection of a geospatial location from a user, and display module 220 is configured to display the at least one identified geospatial location. Both input module 210 and display module 220 may be embodied as a touch-screen display.

Query module 100 and input/output module 200 may be provided by a same device (such as a navigation system or smartphone); if they are not, they are provided with communication capabilities (illustrated by a double-pointed arrow) such that received string 10 can be transmitted to query module 100 and the identified at least one geospatial location (possible including data required for displaying this geospatial location) can be transmitted to input/output module 200.

In order to be able to identify at least one geospatial location, query module 100 is configured to be able to communicate with LLM module 300, on which a large language model, LLM, is implemented. Query module 100 and LLM module 300 may be implemented on a same device; if not, communication capabilities are provided so that query module 100 may transmit queries/prompts to LLM module 300 and may receive LLM output in return.

System 1000 may further comprise at least one data storage module 400, 110. In Fig. 7, data storage module 400 is depicted as an external data storage module being implemented on a separate device, while data storage module 110 is depicted as an internal data storage module being part of query module 100, but this is not to be considered limitative.

External data storage module 400 may for instance store map database 20 and/or POI database 21, which may be accessed by query module 100, for instance to retrieve POIs associated with a certain category.

Internal data storage module 110 may for instance store a list of predetermined POI categories 22 and/or POI category labels 23. POI categories 22 may be derived from POI database 21, and could also be part of POI database 21. The set of POI category labels 23 may be maintained by query module 100. Internal data storage module 110 may store data storage 25, which stores data indicative of an association between the selected POI and the corresponding candidate POI category label - however, this could also be stored on external data storage module 400, for instance as part of POI database 21. Internal data storage module 110 may store a log (not depicted) of previous LLM queries and responses.

System 1000 may further comprise analysis module 120. In Fig. 7, this is depicted as being part of query module 100, but it could also be implemented separately; it may be, in any case, communicatively coupled in some way to the data storage module 400 (or 110) storing POI database 21; to data storage module 110 (or 400) storing POI categories 22 and POI category labels 23; and to data storage module 110 (or 400) storing data storage 25.

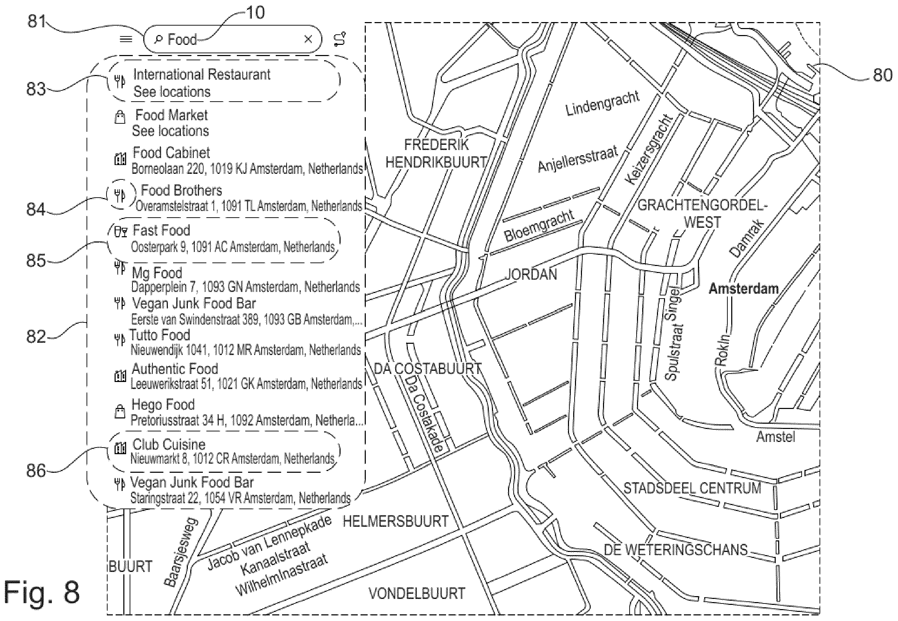

Fig. 8 shows an example screen that may be displayed in the context of the method described above. The displaying may itself form part of the method; the method may, additionally or alternately, comprise providing data for displaying such a screen.

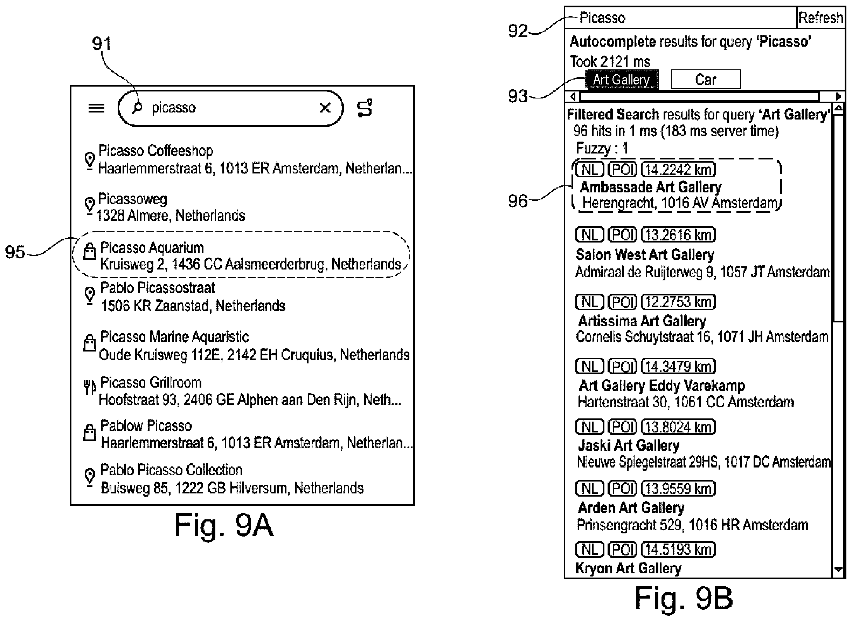

Note that in both this figure and in Figs. 9A and 9B, boxes outlined using dashed borders are not part of what is (to be) displayed, but rather are used to indicate a subsection of what is (to be) displayed.

Fig. 8, in particular, shows possible results from search string corresponding to string 10 corresponding to "food". In this example, search bar 81 and search results 82 are displayed in combination with a map 80, which could in embodiments include markers for some or all of the displayed results. In this example, for each of results 82, an icon 84 is displayed which indicates the type of result, which may for instance be an icon based on a corresponding POI category.

In the displayed example, some POIs are identified directly based on string 10, for instance result 85, which contains the word "Food" as part of the POI name. Other results, such as POI 86, do not contain the word "Food" in their name, but may be found in other ways, for instance based on a POI category associated with POI category label "food". Aside from results corresponding to POIs, the result list may also contain names of POI categories such as "International Restaurant" 83; selecting this POI category then changes the results list (whether by replacing it completely; replacing some results; or supplementing the result list) in accordance with the selected category.

However, not all strings 10 are as easy to parse. Fig. 9A show a possible results list for the string Picasso 91. In this example, it is assumed that we are in a situation wherein "Picasso" does not correspond to an existing POI category label. The list of results therefore will mainly include results including the word "Picasso" in a POI name and/or a street name, such as the Picasso Aquarium 95. Fig. 9B shows how potentially more relevant results could be identified using an LLM query. In particular, it is assumed in this scenario that the query to the LLM returns two candidate POI category labels, namely "art gallery" 93 and "car" 94. Note that this may lead to the correspondence between "Picasso" and "art gallery", as well as between "Picasso" and "car", being stored in a query log, so that a next time a query to the LLM 40 may not be needed. Neither of these two candidate POI category labels, in this scenario, corresponds to an existing POI category label. In the situation depicted in Fig. 9A, a user has selected "Art Gallery" (as indicated by the difference in colors), leading to results including Art Gallery 96, and other results that may be found by querying a map database and/or POI database for "art gallery". If a user selects result 96, an association between "art gallery" and this particular POI may be stored in data storage 25. Result 96 may already have an associated POI category, namely the POI category "museum". If other queries lead to the candidate POI category label "art gallery", and users subsequently select POI 96 or other POIs associated with the POI category "museum", this may eventually lead to "art gallery" being added as a new POI category and/or POI category label, and/or to the category/categories associated with the relevant selected POIs being updated/changed.

While not depicted, advantageous results may also be achieved for strings 10 which are in a language not (yet) represented in existing POI category labels, since a LLM may be capable of finding the most appropriate existing POI category. Furthermore, the proposed method may assist in dealing with more complex entries. For instance, querying the LLM for a candidate POI category label for the string "I need a car for a week" could lead to the identification of "rent-a-car facility", leading to identification of POIs that would not have been found based on a simple search of the map database and/or POI database. Similarly, querying the LLM for a candidate POI category label for the string "renting stand-up paddle-board" could lead to the identification of the POI category "water sports".

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

The foregoing detailed description has been presented for the purposes of illustration and description. It is not intended to be exhaustive or to limit the technology to the precise form disclosed. Many modifications and variations are possible in the light of the above teaching. The described embodiments were chosen in order to best explain the principles of the technology and its practical application, to thereby enable others skilled in the art to best use the technology in various embodiments and with various modifications as are suited to the particular use contemplated. It is intended that the scope be defined by the claims appended hereto.

## Claims

1. Computer-implemented method of identifying at least one geospatial location based on user input, comprising:
receiving a string from a user as the user input;
using the string for identifying at least one point-of-interest, POI; and
identifying, as the at least one geospatial location, a geospatial location corresponding to the at least one identified POI;
wherein using the string comprises:
querying, based on at least part of the string and a predetermined plurality of POI categories, a large language model, LLM, for output relating to identification of at least one POI category label.

2. Method of claim 1, wherein using the string further comprises
extracting, from the output of the LLM, at least one candidate POI category label;
identifying the at least one POI based on the at least one candidate POI category label.

3. Method of claim 2, wherein identifying the at least one POI based on the at least one candidate POI category label comprises:
determining whether the at least one candidate POI category label corresponds to at least one POI category of the predetermined plurality of POI categories, the method optionally further comprising, in response to determining that the at least one candidate POI category label corresponds to at least one of the predetermined plurality of POI categories, identifying the at least one POI based on the at least one corresponding POI category of the predetermined plurality of POI categories.

4. Method of claim 3, further comprising, in response to determining that the at least one candidate POI category label does not correspond to at least one POI category of the predetermined plurality of POI categories, identifying the at least one POI by searching a POI database and/or map database based on the candidate POI category label.

5. Method of claim 4, further comprising providing data for displaying to a user the at least one identified POI in a selectable manner, optionally in combination and/or grouped with the corresponding candidate POI category label.

6. Method of claim 5, further comprising, in response to receiving a selection of one of the at least one POI identified by searching a POI database and/or map database based on the candidate POI category label, storing data indicative of an association between the selected POI and the corresponding candidate POI category label in a data storage.

7. Method of any of claims 3-6, further comprising, in response to determining that the at least one candidate POI category label does not correspond to at least one POI category of the predetermined plurality of POI categories, providing data for displaying to a user the at least one candidate POI category label in a selectable manner, the method optionally comprising, in response to receiving a selection of at least one displayed candidate POI category label, providing at least one POI corresponding to the selected POI category label.

8. Method of any of the previous claims, wherein using the string for identifying at least one POI further comprises:
determining whether at least part of the string satisfies a matching criterion with at least one of the predetermined plurality of POI categories, wherein optionally each POI category is associated with at least one POI category label;
wherein optionally, querying the LLM for output relating to identification of at least one POI category label is in response to determining that the string does not satisfy the matching criterion.

9. Method of claim 8, further comprising, in response to determining that at least part of the string satisfies the matching criterion for at least one POI category, identifying the at least one POI based on the at least one POI category.

10. Method of claim 8 or 9, wherein determining whether at least part of the string satisfies a matching criterion with at least one of the predetermined plurality of POI categories comprises at least one of:
identifying, for each POI category label, whether there is a correspondence between the POI category label and at least part of the string, wherein optionally the matching criterion is whether there is a correspondence between at least part of the string and at least one POI category label;
calculating, for each POI category of the predetermined plurality of POI categories, a similarity parameter between the string and the POI category, wherein optionally the matching criterion whether the similarity parameter exceeds a first threshold for at least one POI category; and
converting at least part of the received string into a search vector, calculating distances between the search vector and vector representations of the predetermined plurality of POI categories, wherein optionally the matching criterion is determined based on the number of POI categories for which the distance does not exceed a second threshold.

11. Method of any of the previous claims, wherein using the string further comprises, in response to the output from the LLM indicating a failure of the identification of at least one candidate POI category label, identifying the at least one POI by searching a POI database and/or map database based on at least part of the string.

12. Method of any of the previous claims, further comprising providing data for displaying the at least one geospatial location to a user, and wherein:
providing data for displaying the at least one geospatial location to a user comprises providing data for visually indicating, for at least one geospatial location, that the geospatial location was identified based on a POI category, optionally comprising visually indicating the POI category based on which the geospatial location was identified;
when a plurality of geospatial locations are identified, providing data for displaying the plurality of geospatial locations to a user comprises providing data for grouping and/or ranking the plurality of identified geospatial locations in accordance with the corresponding POI category;
the method further comprises providing data for displaying, in a selectable manner, a visual indication of at least one POI category identified using the string, and, in response to receiving a selection of a POI category, identifying at least one geospatial location based on the selected POI category and providing data for displaying the at least one geospatial location to a user, and/or
when a plurality of geospatial locations are identified, providing data for displaying the plurality of geospatial locations to a user comprises providing data for displaying, in a selectable manner, a visual indication of at least one POI category corresponding to at least one geospatial location of the plurality of identified geospatial locations, wherein optionally, the method further comprises, in response to receiving a selection of a POI category, filtering and/or reranking the plurality of geospatial locations based on the selected POI category.

13. Method of any of the previous claims, comprising providing data for displaying the identified at least one geospatial location to a user in a selectable manner, and, in response to receiving the selection of at least one geospatial location, providing data indicative of instructions for navigating to the selected geospatial location.

14. Method of updating point-of-interest, POI, information, using a POI database in which a plurality of POIs are associated with at least one of a predetermined plurality of POI categories, wherein the POI information comprises at least one POI category label associated with each POI category, comprising:
accessing a data storage obtainable by the method of claim 6;
for a given candidate POI category label:
determining a frequency of occurrence in the POI database of at least one of the pre-determined plurality of POI categories associated with POIs with an association to the candidate POI category label stored in the data storage;
in response to determining that the frequency of occurrence satisfies a first criterion, adding the candidate POI category label as a POI category label to the at least one of the pre-determined plurality of POI categories; and
in response to determining that the frequency of occurrence satisfies a second criterion, adding the candidate POI category label to the database as a new POI category, and associating the new POI category to the POIs with an association to the candidate POI category label stored in the data storage.

15. Computer program product comprising instructions which, when the program is executed by a computer, cause the computer to carry out the steps of the method of any of the previous claims.
